# EUROPEAN PATENT APPLICATION

(11) **EP 2 279 944 A1**
(43) Date of publication of application: **02.02.2011**
(21) Application number: 09075342.7
(22) Date of filing: 31.07.2009
(51) Int. Cl.: B64C 27/20, B64C 39/02

(54) **Flying platform with a lift rotor**

(71) Applicant: Hanley (China) Limited, Hong Kong (HK); Suntech Enterprises, Seoul (KR)
(72) Inventor: Choi, Key Dong, Seoul (KR)
(74) Representative: Arth, Hans-Lothar

(57) **Abstract**

A flying platform type vehicle includes a fixed-pitch rotor (2) horizontally mounted taking a center axis (1) as the center; a power plant (3) mounted above the rotor; a controlling part (4) mounted under the leaf; a first (11) and a second (12) fixing plates and a first (21) and a second (22) protecting plates being crossed each other in a cross-shape taking the controlling part as the center, one end of the first and the second fixing plates and the first and the second protecting plates connected to the controlling part and the other end of them connected to a round frame (5); a bridge plate (51-54) vertically fixedly mounted under the round frame; and a first (31) and a second (32) adjusting blades controlled by a controlling device of the controlling part, wherein the first and the second adjusting blades are mounted on the first and the second protecting plates respectively.

## Description

### BACKGROUND OF THE INVENTION

### Technical Field

The present invention relates to pilotless rotary-wing aircrafts, and more particularly, to a bottom blade type vehicle.

### Description of Related Art

Conventionally, a bottom blade type vehicle comprises a rotor and leaves powered to rotate taking a center axis as the center, and also includes a power part, a controlling part, fixing plates, and adjusting blades. Among the known approaches to controlling the flight direction and achieving the flight stability of the existing bottom blade type vehicle, it is a popular one to implement a variable screw-pitch rotor that has plural leaves whose helix angles are to be repeatedly adjusted for controlling the flight direction of the vehicle. In another common approach, a transverse shaft are provided at the bottom of the vehicle for holding plural adjusting blades so that the flight direction of the vehicle can be controlled by adjusting the adjusting blades.

However, in the former approach relying on the variable screw-pitch rotor, the way to control the flight direction of the vehicle is to separately adjust the helix angle of each of the leaves. Thus, the adjustment is complicated and power loss tends to happen due to the variation of the helix angles. In the latter approach where the transverse shaft mounted with adjusting blades is utilized to control the flight direction of the vehicle, air eddy is prone to form around the adjusting blades and adversely affects the stability of the vehicle. Moreover, this approach requires complex adjustment and controlling device, thus increasing the size and weight, and reducing power efficiency of the vehicle.

The aforementioned variable screw-pitch rotor also facilitates stabilizing the vehicle in flight. That is, when the vehicle loses its balance, the screw pitch of the rotor can be adjusted to rebalance the vehicle. However, the adjustment of the variable screw-pitch rotor needs complex mechanism, and has the problem of reduced power loss caused by the variation of the helix angles.

Furthermore, the fixing plates and adjusting blades adjusted by the controlling device of the controlling part serve to remain the vehicle stable and to control the vehicle to rotate left or right. The components provide the same function as the tail rotor of a normal helicopter. By offsetting the semi-torque generated by the rotation of the rotor, the downward wind generated by the rotation of the blades can make the vehicle to rotate clockwise or anticlockwise.

Conventionally, plural sets of fixing plates that are mounted under the leaves and plural sets of adjusting blades are further mounted under the fixing plates. Thus, the adjusting and controlling devices have complicated structures. As a result, the size and weight of the vehicle are increased due to the adjusting device, thereby reducing power efficiency.

### SUMMARY OF THE INVENTION

In view of the problems of the prior art, the objective of the present invention is to provide a bottom blade type vehicle that is simple in the structure and adjustment. The bottom blade type vehicle implements a fixed screw-pitch leaf having fixed helix angles and a fixed shape, rather than a variable screw-pitch rotor or a transverse shaft assembled with holding adjusting blades. The bottom blade type vehicle of the present invention thus can perform stopping, rotating left, rotating right, flying forward and flying backward by simply adjusting two adjusting blades.

The bottom blade type vehicle of the present invention is characterized in a fixed screw-pitch leaf horizontally mounted taking a center axis as the center; a power part mounted above the leaf; a controlling part mounted under the leaf; a bridge plate vertically fixedly mounted under a round frame, wherein the a first and a second fixing plates and a first and a second protecting plates being crossed each other in a cross-shape taking the controlling part as the center, one end of the first and the second fixing plates and the first and the second protecting plates connected to the controlling part and the other end of them connected to the round frame; and a first and a second adjusting blades controlled by a controlling device of the controlling part, wherein the first and the second adjusting blades are mounted on the first and the second protecting plates respectively.

As described above, the conventional bottom blade type vehicle uses the variable screw-pitch rotor that needs to be repeatedly adjusted on the helix angles or the long adjusting blades that are mounted in the transverse shaft for realizing the balance and stability of the vehicle during its forward or backward flight. Besides, for maintaining the vehicle balanced and stable, the installed variable screw-pitch rotor needs to be adjusted. The adjusting blades are installed and adjusted to offset the left or right rotation of the vehicle. However, the structure and the adjusting device are complicated and have the problem of reduced power efficiency. On contrary, in the present invention, the weight of the vehicle is evenly distributed so that the gravity of the vehicle is aligned with the center of the leaf. Thereby, the present invention allows the vehicle to offset the semi-torque and to perform directional change, e.g. stopping, rotating left, rotating right, flying forward and flying backward by simply using the fixed screw-pitch leaf and the two adjusting blades.

Therefore, the bottom blade type vehicle of the present invention is simple in the structure and adjustment and is capable of achieving the optimum design of the fixed screw-pitch leaf of the vehicle, thus decreasing its size and weight in comparison with a variable screw-pitch blade type vehicle, and improving power efficiency, thus prolonging the flight duration of the bottom blade type vehicle.

### BRIEF DESCRIPTION OF THE DRAWINGS

FIG. 1 is an oblique perspective view of a bottom blade type vehicle of the present invention;
FIG. 2 is another oblique perspective view of the bottom blade type vehicle wherein a part of components in FIG. 1 is removed;
FIG. 3 is a schematic drawing showing the weight distribution of the vehicle of FIG. 1;
FIG. 4 is a schematic drawing showing the vehicle inclined;
FIG. 5 is another oblique perspective view of the bottom blade type vehicle wherein a round frame and a bridge plate are removed;
FIG. 6 is a top view of FIG. 5 showing the blades posed to make the vehicle fly forward;
FIG. 7 is another top view of FIG. 5 showing the blades posed to make the vehicle fly backward; and
FIG. 8 is a sectional view of the essential components of the bottom blade type vehicle of the present invention.

### BRIEF DESCRIPTION OF THE REFERENCE NUMERALS OF MAJOR COMPONENTS

| | | | |
|---|---|---|---|
| 1 | center axis | 2 | leaf |
| 3 | power part | 4 | controlling part |
| 5 | round frame | 7 | controlling device |
| 8 | connecting wire | 11 | first fixing plate |
| 12 | second fixing plate | 21 | first protecting plate |
| 22 | second protecting plate | 31 | first adjusting blade |
| 32 | second adjusting blade | 51 | first bridge plate |
| 52 | second bridge plate | 53 | third bridge plate |
| 54 | fourth bridge plate | 61 | power source |
| 62 | power device | 63 | power gear |
| 64 | external gear | | |

### DETAILED DESCRIPTION OF THE PREFERRED EMBODIMENT

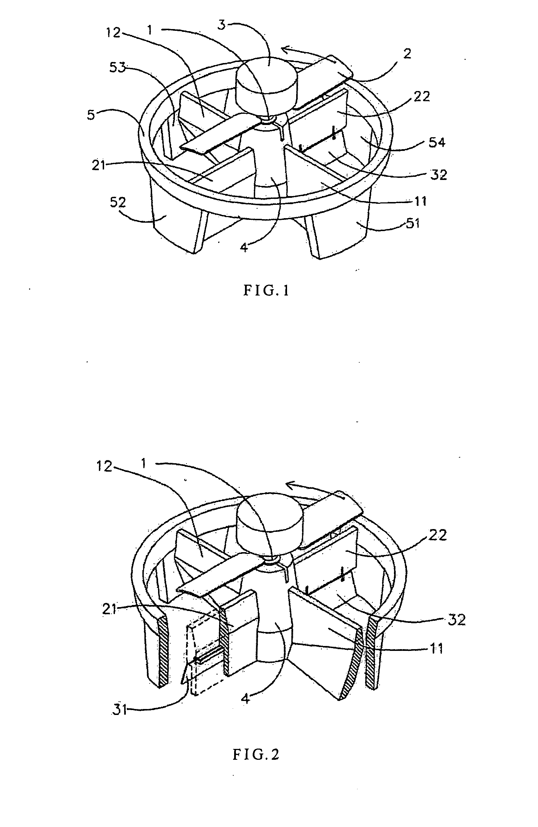

Please refer to FIGS. 1 and 2 for the entire structure of a bottom blade type vehicle of the present invention that achieves the aforementioned objective.

In the present invention, a fixed screw-pitch leaf 2 is horizontally mounted taking a center axis 1 as the center. A power part 3 is mounted above the leaf 2 while a controlling part 4 is mounted under the leaf. In addition, a first and a second fixing plates 11, 12 and a first and a second protecting plates 21, 22 are crossed each other in a cross-shape taking the controlling part as the center. The cross-shape assembly is vertically connected inward to the controlling part and connected outward vertically to a round frame 5 and bridge plates 51, 52, 53, and 54. A first and a second adjusting blades 31, 32 controlled by a controlling device of the controlling part 4 are mounted on the first and the second protecting plates 21, 22, respectively.

As shown in FIG. 1, the round frame 5 of the present invention is a round-shaped frame of the vehicle serving to transmit the wind generated by the rotation of the leaf 2 downward and to hold the fixing plates 11, 12, the protecting plates 21, 22, and the bridge plates 51, 52, 53, and 54.

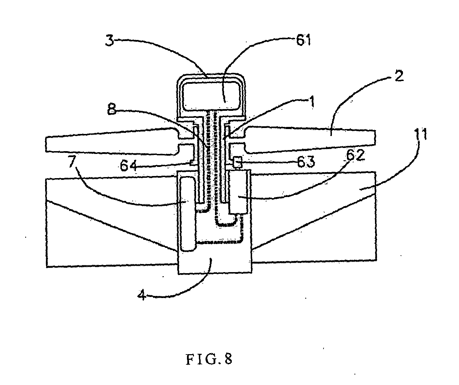

Referring to FIG. 8, the center axis 1 is a circular hollow tube acting as a channel connecting the power part 3 and the controlling part 4 of the adjusting device of the vehicle. Shafts of the leaf 2 rotated anticlockwise by the power device are affixed to the exterior of the center axis 1.

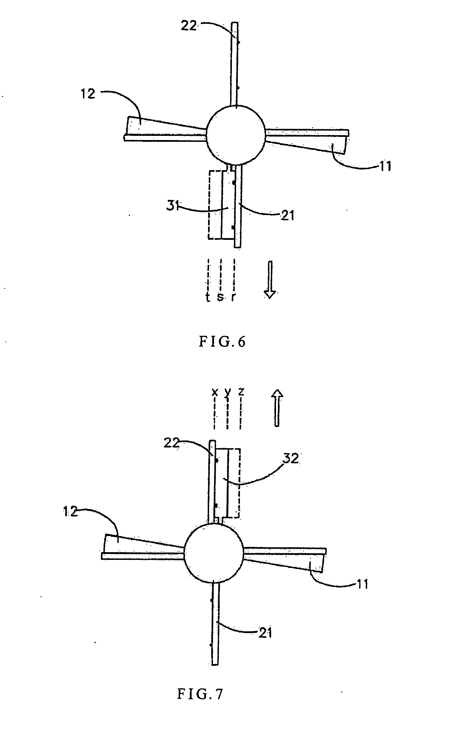

The first and the second fixing plates 11, 12, as can be seen on the first fixing plate 11 in FIGS. 2 and 6, have their lower portions jutting out of the center axis 1 extending outward to form a ladder-like, forward bent body, so as to present an enlarged area for receiving wind as much as possible.

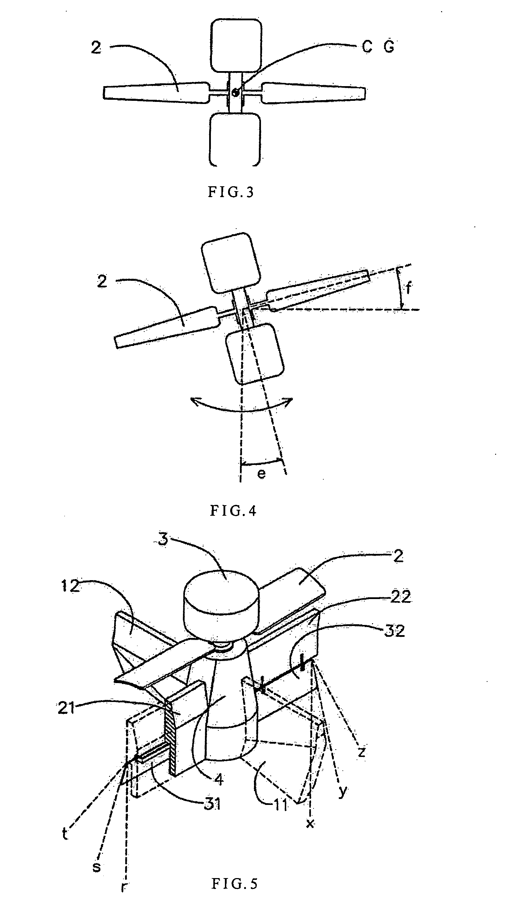

The first and the second protecting plates 21, 22 as well as the first and the second adjusting blades 31, 32 are shown clearly in FIGS. 2 and 5. The first and second adjusting blades 31, 32 are mounted on the first and the second protecting plates 21, 22, respectively. In addition, slots and hinges are implemented to attach the rectangular first and second adjusting blades 31, 32 to the first and second protecting plates 21, 22, respectively, so that the first and second adjusting blades 31, 32 can swing with respect to the first and second protecting plates 21, 22. The first and the second adjusting blades 31, 32 installed on the first and second protecting plates 21, 22 can be independently adjusted by the adjusting device.

The bridge plates 51, 52, 53, 54 protect the first and the second fixing plates 11, 12, the first and the second adjusting blades 31, 32, as well as the first and the second protecting plates 21, 22 during lifting and landing of the vehicle. The bridge plates 51, 52, 53, 54 also ensure the wind coming downward from the leaf 2 can be well transmitted to the first and the second fixing plates 11, 12, the first and the second adjusting blades 31, 32, as well as the first and the second protecting plates 21,22.

Furthermore, the first and the second fixing plates 11, 12 and the first and second protecting plates 21, 22 are such mounted on the controlling part 4, the round frame 5, and the bridge plates 51, 52, 53, 54 that they are firmly fixed to each other in a cross-shape. Thereby, the need of additional supporting base to support the vehicle can be eliminated.

FIG. 2 is another oblique perspective view modified from FIG. 1, wherein the round frame 5, the bridge plates, and the first protecting plate 21 are partially removed for illustrating the first protecting plate 21, the first adjusting blade 31, the controlling part 4 and the first fixing plate 11 with enhanced clearness.

The present invention provides an approach to balancing and stabilizing an aircraft without using any variable screw-pitch rotor. The present invention implements the principle of balancing and stabilizing the vehicle by, taking the leaf 2 as shown in FIG. 1 as the vertical center, evenly distributing the weight of the vehicle to portions above and below the fixed screw-pitch leaf. The fixed screw-pitch leaf 2, as a rotator, is innately capable of maintaining level and balanced during rotation. The present invention substantially employs the capability of maintaining level and balanced as the resources of balancing and stabilizing the vehicle.

Meantime, the capability of the fixed screw-pitch leaf 2 for maintaining its levelness and balance is referred to as the "righting force" in the present invention.

FIG. 3 is a schematic drawing of the vehicle showing the weight evenly distributed to the upper portion and the lower portion located above and below the fixed screw-pitch leaf 2, respectively. FIG. 4 shows the flying vehicle of FIG. 3 inclined because of an external factor such as uneven weight distribution during flight or irregular airflow acting on the fixed screw-pitch leaf 2 and the vehicle swings in the horizontal direction of the fixed screw-pitch leaf 2 under the righting force "f'.

As shown in FIGS. 3 and 4, there are the force "e" causing the vehicle to swing and the righting force "f" facilitating the vehicle to maintain horizontally level during the rotation of the fixed screw-pitch leaf as the rotor. If the righting force "f' surpasses the swinging force "e", the vehicle maintains horizontally balanced and stabilized.

On the contrary, when the righting force "f" is smaller than the swinging force "e", the vehicle remains swinging. In addition, the swinging force "e" is associated with the weight of the vehicle. The heavier the vehicle is, the stronger the swinging force "e" is. Therefore, reducing the weight of the vehicle helps the righting force "f" to maintain the vehicle horizontally balanced and stabilized. In other words, reducing the weight of the vehicle facilitates maintaining the vehicle balanced and stabile during flight.

However, since the vehicle needs at least a power source, the power part and the controlling device to operate, the approach of reducing the weight of the vehicle has its limitation.

For addressing this problem, as shown in FIG. 3, the vehicle is such configured that the overall weight of the entire vehicle is distributed to the upper and the lower portions that take the fixed screw-pitch leaf as the center 2. Thereby, the balance and the stability of the vehicle can be realized with a relatively small righting force as long as the swinging force equal to the weight difference between the upper portion and the lower portion of the vehicle can be offset. Thus, the swinging force can be minimized by reducing the weight difference between the upper portion and the lower portion.

Herein, the gravity center is at the intersect between the center axis 1 and the fixed screw-pitch leaf 2, as the point C or G in FIG. 3.

Therefore, if the weight of the vehicle is evenly distributed to the upper portion and the lower portion so as to make the gravity of the vehicle aligned with the horizontal center of the screw-pitch leaf 2, the stability of the vehicle can be achieved with a relatively small righting force, thereby reducing power loss.

As described above, when the total weight of the vehicle is evenly distributed to the upper portion and the lower portion located above and below the screw-pitch leaf 2, only a small righting force is enough to maintain the vehicle balanced and stable during flight, and in turn the fixed screw-pitch leaf is competent to replace the variable screw-pitch rotor that is used in the prior art and is complex in the structure and adjustment.

Besides, without using the variable screw-pitch rotor that is used in balancing and stabilizing device in the existing bottom blade type vehicle, the present invention minimizes the power loss caused by the variable screw pitches by implementing the fixed screw-pitch rotor, so as to simplify structure and adjustment of the disclosed vehicle. By using the simple fixed screw-pitch leaf to replace the variable screw-pitch leaf, it is achievable to realize the optimum design of the fixed screw-pitch leaf of the vehicle, thus simplifying the vehicle in the structure.

FIG. 5 is provided for illustrating the operation of the vehicle, including stopping, left rotation, right rotation, flying forward and flying backward. As compared with FIG. 1, the round frame 5 and the bridge plates 51, 52, 53, 54 are removed to show the locations and installation of the first and the second adjusting blades 31, 32 so as to clearly provide the structure of the first and the second fixing plates 11, 12 as well as the first and the second adjusting blades 31, 32. In the drawing, the first and the second fixing plates 11, 12, as well as the first and the second protecting plates 21, 22 where the first and the second adjusting blades 31, 32 are attached, are fixed in a cross-shape to the controlling part 4.

First, please refer to FIG. 5 for the stopping and left and right rotation of the vehicle. When the fixed screw-pitch leaf 2 is powered to rotate anticlockwise and flies the vehicle, the vehicle rotates clockwise according to the semi-torque generated by the rotation of the leaf.

At this time, for offsetting the semi-torque generated by the rotation of the leaf 2 and preventing the vehicle from rotating in either direction, what is needed to do is to pose the first adjusting blade 31 "s" and pose the second adjusting blade 32 at "y". At this time, the downward wind generated by the rotation of the leaf 2 acts on the first adjusting blade 31 and the second adjusting blade 32, thereby offsetting the semi-torque of the vehicle and restricting the vehicle from rotating. Thus, the vehicle is stabilized and stops.

Similarly, when the first adjusting blade 31 is posed at "t" and the second adjusting blade 32 is posed at "z", the expanding angles of the blades are enlarged. Thus, the downward wind generated by the rotation of the leaf 2 acts on the first adjusting blade 31 and the second adjusting blade 32, thereby generating a force greater than the semi-torque of the vehicle so as to make the vehicle rotate anticlockwise and then complete its left rotation.

On the contrary, when the first adjusting blade 31 is posed at "r" and the second adjusting blade 32 is posed at "x", the expanding angles of the blades are reduced. Thus, the downward wind generated by the rotation of the leaf 2 acts on the first adjusting blade 31 and the second adjusting blade 32, thereby generating a force smaller than the semi-torque of the vehicle so as to make the vehicle rotate clockwise and then complete its right rotation.

Please refer to FIGS. 5, 6, and 7 for the forward and backward flight of the vehicle. The vehicle can be set to fly forward or backward by changing the angles of the first adjusting blade 31 and the second adjusting blade 32. For example, if it is desired to move the vehicle toward the first protecting plate 21, what is needed to do is to set the first adjusting blade 31 at "t" and set the second adjusting blade 32 at "x". By merely adjusting the angles of the adjusting blades to make the wind only acts on the first adjusting blade 31, the vehicle is set to fly forward.

FIG. 6 is a top view of the blades. Please see the adjusting blades 31, 32 in the drawing for learning the principle whereupon the vehicle flies forward. Therein, the first adjusting blade 31 is expanded to take a relatively large horizontal area while the second adjusting blade 32 is retracted to leave the horizontal area therearound vacant.

Therefore, since the first adjusting blade 31 resists the semi torque more than the second adjusting blade 32 does, the vehicle inclines toward the first adjusting blade 31. Besides, the leaf 2 corresponding to the second adjusting blade 32 receives less resistance induced by the wind and tilts upward due to the relatively large lifting force while the first adjusting blade 31 inclines downward due to the relatively small lifting force, so that the vehicle flies toward the first protecting plate 21, as indicated by the downward arrow in FIG. 6.

Moreover, if it desired to fly the vehicle toward the second protecting plate 22, under the same principle, the first adjusting blade 31 is placed at "r" and the second adjusting blade 32 is placed at "z". By merely adjusting the angles of the adjusting blades to make the wind only act on the second adjusting blade 32, the vehicle is set to fly backward.

That is, as shown in the top view of the adjusting blades in FIG. 7, the second adjusting blade 32 is expanded to take a relatively large area therearound while the firs adjusting blade 31 is retracted to leave the area therearound vacant.

Therefore, since the second adjusting blade 32 resists the semi torque more than the first adjusting blade 31 does, the vehicle inclines toward the second adjusting blade 32. Besides, the first adjusting blade 31 receives less resistance induced by the wind of the leaf 2 and tilts upward due to the relatively large lifting force while the second adjusting blade 32 inclines downward due to the relatively small lifting force. As a result, the vehicle backs toward the second protecting plate 22, namely along the upward arrow in FIG. 7.

As described above, the stopping, progressing, backing, left rotating and right rotating can be achieved by independently adjusting the first adjusting blade 31 and the second adjusting blade 32, causing the vehicle simple in structure.

Referring to the above embodiment and FIG. 8, taking the fixed screw-pitch leaf as the center for mounting a power source 61 on the power part 3, the power source 61 is allowed to transmit power downward by means of a connecting wire 8 passing through the tubular center axis. The rest parts of the vehicle, namely an external gear 64, a power device 62, a power gear 63, a controlling device 7, the first and the second fixing plates 11, 12, the first and the second adjusting blades 31, 32, the first and the second protecting plates 21, 22, and the bridge plates 51, 52, 53, 54 can then assembled below. Thereby, the total weight of the vehicle is distributed evenly above and below the fixed screw-pitch leaf 2. Herein, the power part 3 and the controlling part 4 are installed according to weight balance and design so as to have the gravity of the vehicle aligned with the fixed screw-pitch leaf 2 and the center axis 1.

The operational principle of the present invention is as shown in FIG. 8. The connecting wire 8 connected to the power source transmits power to the controlling device for controlling the power device. When the power gear 63 fixed center axis to the shaft of the power device rotates, the external gear 64 engaged with the power gear 63 from outside rotates at the same time, thus making the fixed screw-pitch leaf 2 rotate and in turn flying the bottom blade type vehicle.

## Claims

1. A bottom blade type vehicle, comprising:
a fixed screw-pitch leaf horizontally mounted taking a center axis as the center;
a power part mounted above the leaf;
a controlling part mounted under the leaf;
a first and a second fixing plates and a first and a second protecting plates being crossed each other in a cross-shape taking the controlling part as a center, each of the first and the second fixing plates and the first and the second protecting plates having one end connected to the controlling part and an opposite end connected to a round frame;
bridge plates vertically fixedly mounted under the round frame; and
a first and a second adjusting blades controlled by a controlling device of the controlling part;
wherein the first and the second adjusting blades are mounted on the first and the second protecting plates respectively.

2. The bottom blade type vehicle of Claim 1, wherein the vehicle has a weight of an upper portion equal to a weight of a lower portion, wherein the upper and the lower portions take the leaf in a horizontal position as a center, and wherein the vehicle has a gravity located at an intersect between a horizontal of the center axis and a vertical of the center axis.

3. The bottom blade type vehicle of Claim 1, wherein the vehicle is set to offset semi torque, or to perform stop, forward, backward progress, left rotation or right rotation by adjusting the fixed screw-pitch leaf and the first and the second adjusting blades.

4. The bottom blade type vehicle of Claim 1, wherein each of the first and the second fixing plates has a lower portion jutting out of the center axis expanding outward to form a ladder-like, forward bent body.
